## Europäisches Patentamt
## European Patent Office
## Office européen des brevets

(11) Numéro de publication: **0 185 562**
**B1**

# FASCICULE DE BREVET EUROPÉEN

(45) Date de publication du fascicule du brevet:
**18.05.88**

(21) Numéro de dépôt: **85402135.9**

(22) Date de dépôt: **06.11.85**

(51) Int. Cl.⁴: **A 47 J 43/12,** A 01 J 11/16

(54) Appareil foisonneur, notamment pour la préparation de produits alimentaires.

(30) Priorité: **19.11.84 FR 8417587**

(43) Date de publication de la demande:
**25.06.86 Bulletin 86/26**

(45) Mention de la délivrance du brevet:
**18.05.88 Bulletin 88/20**

(84) Etats contractants désignés:
**AT BE CH DE GB IT LI LU NL SE**

(56) Documents cité:
**CH-A-168 686**
**US-A-4 018 545**

(73) Titulaire: **Etablissements Cazas, 52 à 56 rue Bernard, F-93000 Bobigny (FR)**

(72) Inventeur: **Cazas, Francis, 14 rue du Rocher, F-94440 Santeny (FR)**

(74) Mandataire: **Viard, Jean, Cabinet VIARD 28 bis, avenue Mozart, F-75016 Paris (FR)**

EP 0 185 562 B1

LIBER, STOCKHOLM 1988

**Description**

La présente invention a pour objet un dispositif de foisonnement destiné en particulier, mais non exclusivement, à la préparation de produits alimentaires tels que les mousses ou les crèmes du type "Chantilly" composés d'une émulsion d'un produit généralement gras et d'un gaz inerte tel que de l'azote, par exemple.

De telles préparations sont connues depuis fort longtemps et sont obtenues, dans les cuisines en battant le produit de base ce qui provoque l'inclusion de bulles d'air dans le produit. Un exemple est donné, par exemple, dans la montée des blancs d'oeufs en neige. Les mouvements des batteurs produisent des pressions et dépressions qui provoquent cette inclusion.

La présente invention vise plus particulièrement la fabrication industrielle de produits de ce type. Elle est actuellement réalisée de la manière suivante: On mélange le produit fluide tel que la crème par exemple et le gaz sous pression, soit par charge dans une cuve avec battage des produits; soit en continu dans des machines tournantes appelées "foisonneuses" comportant un stator et un rotor permettant le battage des produits. Après quoi, l'emulsion obtenue est dirigée vers un réservoir à partir duquel les portions sont prélevées. Cette solution présente divers inconvénients le premier provient de ce qu'il est impossible de doser avec exactitude des produits foisonnés alors que le dosage de produits liquides ne pose aucun problème; le second provient de ce que le transfert des produits foisonnés se traduit par des pertes et des transformation des produits; le troisième résulte de ce qu'au remplissage des pots constituant des doses notamment individuelles il est très difficile d'obtenir un niveau de remplissage constant. Dans les machines connues, un produit foisonné à 2,8 se retrouve fréquemment, à la sortie du réservoir, à un foisonnement de 2, notamment en raison des pertes de charge dans les canalisations. Le foisonnement ou coefficient de foisonnement est le rapport du volume du produit foisonné au volume du produit non foisonné. Bien entendu, la tenue des produits foisonnés dans le temps et leur stabilité dépend d'une part de la nature du produit et, notamment de sa teneur en matières grasses et, d'autre part, du coefficient de foisonnement. Il est donc crucial de pouvoir contrôler dans un processus de fabrication industrielle le coefficient de foisonnement final, d'autant plus que la législation interdit pour certains types de produits l'adjonction de produits stabilisateurs.

On a déjà proposé de réaliser le foisonnement d'un produit en créant une pression à l'aide d'un piston suivie d'une détente. Dans US-A-4 018 545 est décrite une pompe mélangeuse destinée à la confection de crèmes glacées et comprenant un réservoir de produits liquides à l'intérieur duquel est montée une pompe doseuse, une vanne d'entrée du liquide, une canalisation de gaz sous pression et une canalisation de sortie du mélange gaz liquide.

La présente invention a pour objet de pallier les inconvénients des appareils connus, en réalisant le foisonnement immédiatement avant le remplissage des récipients acheminés vers le consommateur final ce qui permet d'obtenir des doses régulières d'un produit de consistance constante. On sait en effet parfaitement doser un produit liquide. Il est par ailleurs possible d'ajouter à la quantité dosée une quantité de gaz connue sous une pression connue puis de distribuer, après détente de l'ensemble sous pression ce qui produit le foisonnement de quantités déterminées de produits foisonnés.

Selon la présente invention, l'appareil de foisonnement notamment pour produits alimentaires comprenant un réservoir de produits liquides, une pompe volumétrique reliée au réservoir par une canalisation pouvant être obturée par une valve, une chambre à volume variable dans laquelle est introduit, outre le produit liquide, un gaz sous pression par une canalisation, ladite chambre comprenant une canalisation de sortie du mélange, caractérisé en ce que un tiroir formant ladite valve est prévu entre la pompe doseuse volumétrique et la chambre à volume variable, ouvrant puis obturant la canalisation de sortie du réservoir, et obturant puis ouvrant une canalisation reliée à la chambre à volume variable, la chambre à volume variable étant séparée de la chambre d'admission du liquide dans la pompe doseuse volumétrique, de sorte que les opérations de dosage et de compression-détente soient constamment séparées.

Ainsi, le produit foisonné ne se forme que dans le récipient destiné au consommateur final ce qui, bien entendu permet d'obtenir un produit dont le foisonnement ne sera pas altéré par les transferts.

Selon une autre caractéristique de l'invention, une soupape est disposée entre le doseur et la chambre de mélange à volume variable. Cette soupape à ressort s'ouvre lorsque le distributeur a dosé une dose de produit liquide ou visqueux et se ferme lorsque la compression est appliquée à l'intérieur de la chambre. Ainsi, le doseur est protégé de la surpression appliquée par la réduction de volume de la chambre et l'introduction de gaz sous pression.

Selon encore une autre caractéristique de l'invention, le produit liquide ou visqueux est introduit dans le corps de la chambre par l'intermédiaire d'une multiplicité de petits conduits. Cette division du produit sous pression favorise le foisonnement ultérieur.

D'autres caractéristiques et avantages de la présente invention apparaîtront au cours de la description qui va suivre d'un mode particulier de réalisation, donné uniquement à titre d'exemple non limitatif, en regard des dessins qui représentent:
- La Fig. 1, une vue en coupe de l'appareil selon l'invention lors de l'introduction des produits;

- La Fig. 2, la même vue lors de la compression.

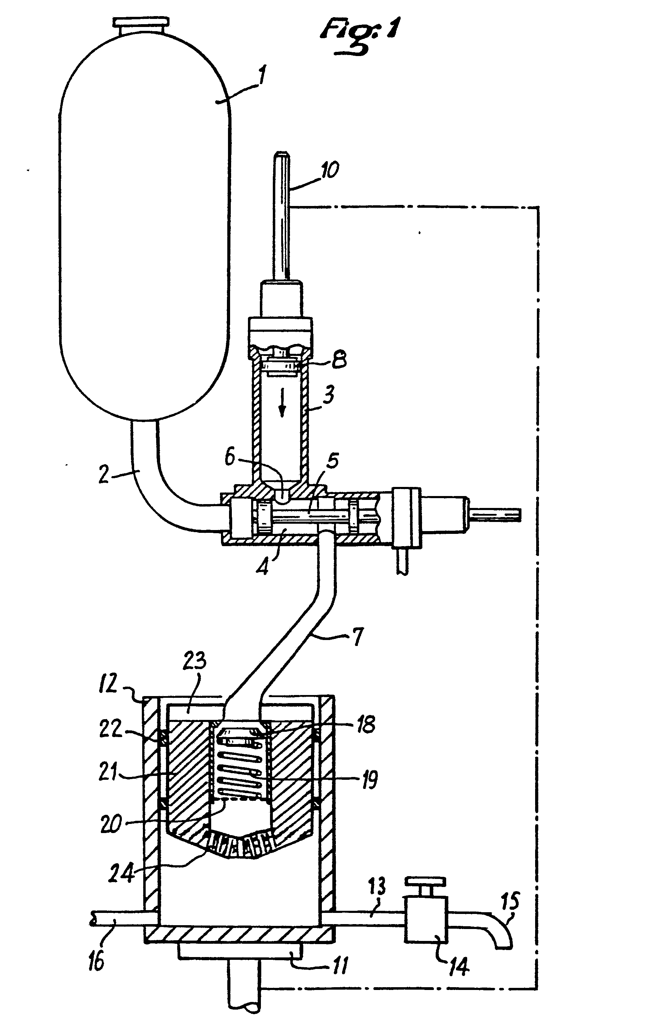

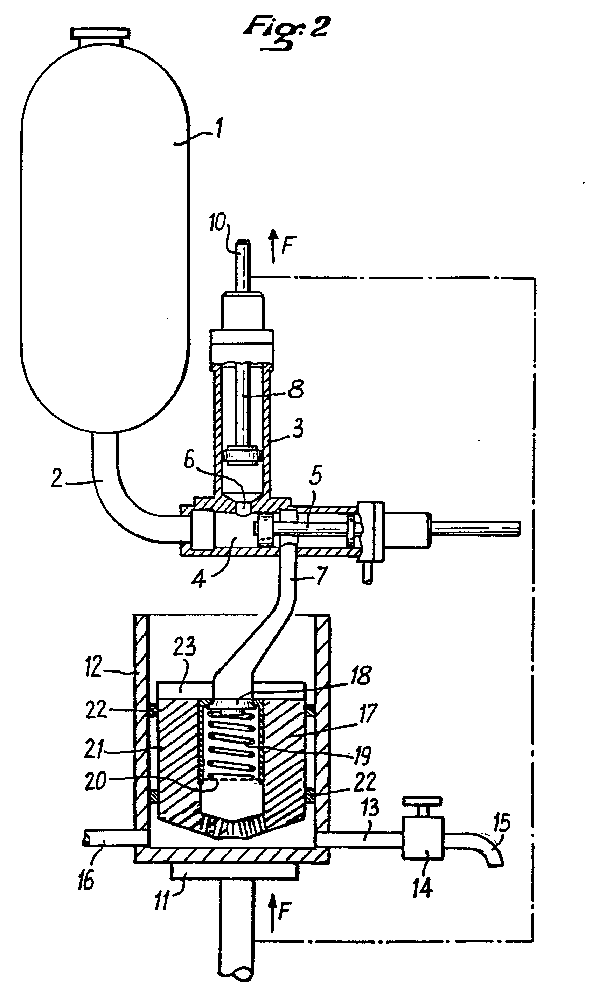

L'appareil comprend un réservoir 1 du premier constituant à l'état liquide ou semi-liquide. Ce produit est prélevé, par doses unitaires dans le réservoir 1 par une canalisation 2 reliée par ailleurs à une vanne doseuse. La vanne doseuse comprend une chambre verticale 3 dans laquelle se meut d'un mouvement alternatif un piston 8. La canalisation 2 est reliée directement à une chambre 4 dans laquelle se déplace un tiroir 5 permettant d'obturer la canalisation 2. La chambre 4 est reliée à la chambre 3 par un orifice calibré 6. Le fonctionnement de la vanne doseuse est le suivant: à partir de la position représentée sur la Fig. 2, le piston 8 remonte vers le haut de la figure. Ce faisant, il emmagasine dans la chambre 3 un quantité exactement dosée du liquide contenu dans le réservoir 1. Le liquide ne peut pas pénétrer dans une autre partie de la vanne étant donné la position prise par le tiroir 5. Lorsque le piston arrive à sa position supérieure, (comme celà apparaît sur la Fig. 1), le tiroir vient fermer le conduit 2, de sorte que la vanne est alors isolée du réservoir 1. Le piston 8 redescend vers sa position basse et, pendant ce mouvement, il chasse la matière liquide vers le seul orifice ouvert qui est celui d'une canalisation 7 reliant la vanne doseuse à l'étage de foisonnement se trouvant au-dessous de la vanne.

Celui-ci se compose d'un cylindre 12 verticalement mobile sous l'action d'un piston extérieur 11 couplé au vérin 10 de déplacement du piston 8 mobile dans la chambre 3. Le cylindre 12 se déplace sur un piston fixe 23 relié à la canalisation 7, l'étanchéité chambre 12, piston 23 étant assurée par des joints 22. La chambre 12 présente, à sa partie inférieure une canalisation d'introduction de gaz sous pression 16 et une canalisation de sortie 13 fermée par une vanne 14, du type haute pression elle-même reliée à une canalisation de prélèvement 15. Le piston 23 est creux et est solidaire, à sa partie supérieure d'une pièce cylindrique 17. La pièce 17 renferme un clapet 18 armé par un ressort de rappel 19. Le ressort 19 prend appui, à sa partie inférieure sur une paroi 20 constituant un tamis ou filière ayant pour rôle de diviser la masse liquide en une pluralité de filaments. Ce phénomène peut encore être accentué en prévoyant, comme représenté sur le dessin une multiplicité de petits orifices 24 sensiblement radiaux. Cette division de la matière s'est révélée très favorable à l'obtention de produits foisonnés.

Le fonctionnement de l'étage foisonneur est le suivant: comme expliqué ci-dessus en regard de la Fig. 1, le mouvement descendant du piston chasse la matière liquide exactement dosée dans le canalisation 7. Sous la pression impulsée à la matière liquide le clapet libre 18 est repoussé vers le bas et la matière pénètre à l'intérieur de la pièce cylindrique 19. Toujours sous la pression du piston 8, la matière liquide est divisée dans le filière 20. Puis, elle tombe dans la partie inférieure de la chambre 12. Du gaz sous pression, tel que de l'azote, par exemple est introduit par la canalisation 16. Le produit liquide et le gaz se mélangent dans la chambre 12. La vanne 14 est alors fermée.

Selon une caractéristique de l'invention, simultanément à la remontée du piston 8, le piston 11 fait remonter la chambre 12 vers le haut de la figure. ce qui réduit le volume de la partie inférieure de cette chambre et provoque la compression du liquide et du gaz. Comme celà apparaît sur la Fig. 2, qui représente les différents organes en fin de course, dès que la compression commence le ressort 19 ramène le clapet 18 contre son siège ce qui isole la chambre 12, de la vanne doseuse. Cette dernière ne subit donc pas la surpression provoquée par le mouvement de la chambre 12. Comme indiqué précédemment, le foisonnement du mélange liquide-gaz ne se produit que lors de la détente ultérieure. Si l'étage de foisonnement est dimensionné de manière à correspondre à une dose unitaire, un récipient est disposé au-dessous de la canalisation 15 et l'ouverture de la vanne 14 libère une dose de produit foisonné. Si l'étage de foisonnement est d'un volume supérieur à une dose unitaire, les récipients sont remplis au fur et à mesure par ouverture de la vanne 14. Lorsque tout le mélange liquide-gaz a été évacué, l'appareil est prêt à effectuer un nouveau cycle. C'est-à-dire que le tiroir 5 est ramené vers l'avant de la figure et que la chambre descend en simultanéité avec le piston 8 en raison de la liaison mécanique représentée en traits mixtes sur les figures. Bien entendu, les mouvements du tiroir 5 sont également synchronisés par un mécanisme (non représenté) avec les mouvements des pistons 8 et 11.

**Revendications**

1. Appareil de foisonnement notamment pour produits alimentaires comprenant un réservoir de produits liquides (1), une pompe volumétrique (3) reliée au réservoir (1) par une canalisation (2) pouvant être obturée par une valve (5), une chambre à volume variable (12) dans laquelle est introduit, outre le produit liquide, un gaz sous pression par une canalisation (16), ladite chambre comprenant une canalisation de sortie (13) du mélange, caractérisé en ce qu'un tiroir (5) formant ladite value (5) prévu entre la pompe doseuse volumétrique (3) et la chambre (12) à volume variable, ouvrant puis obturant la canalisation (2) de sortie du réservoir, et obturant puis ouvrant une canalisation (7) reliée à la chambre (12) à volume variable, la chambre à volume variable (12) étant séparée de la chambre d'admission du liquide dans la pompe doseuse volumétrique (8), de sorte que les opérations de dosage et de compression-détente soient constamment séparées.

2. Appareil selon la revendication 1, caractérisé en ce que la chambre (12) à volume variable comprend un piston fixe (23) creux, relié à la canalisation (7), et un cylindre deplacé par un piston (11) en synchronisme avec le piston (8) de la vanne doseuse (3).

3. Appareil selon l'une des revendications 1 ou 2, caractérisé en ce que le piston (23) comporte un alésage central à l'intérieur duquel est disposé un clapet libre (18).

4. Appareil selon la revendication 2, caractérisé en ce que la partie inférieure du piston (23) comprend une paroi percée de petits orifices (24).

5. Appareil selon l'une quelconque des revendications précédentes, caractérisé en ce que les mouvements du tiroir (5) sont synchronisés avec les mouvements des pistons (8, 11).

6. Appareil selon la revendication 3, caractérisé en ce que le clapet (18) est libre et armé par un ressort (19) à l'intérieur d'une pièce cylindrique (17) fermée à sa partie inférieurre par un tamis (20) et reliée à sa partie supérieure à la partie inférieure de la canalisation (7), le clapet (18) remontant en position de fermeture lorsque le cylindre remonte sous l'action du piston (11).

**Patentansprüche**

1. Vorrichtung zum Aufschlagen (Aufschäumen) insbesondere von Nahrungsmitteln, bestehend aus einem Vorratsbehälter (1) für flüssige Stoffe, einer mit dem Vorratsbehälter (1) über eine Rohrleitung (2), die durch ein Ventil (5) geschlossen werden kann, verbundenen Dosierpumpe (3), einer variables Volumen aufweisenden Kammer (12), in die außer dem flüssigen Stoff über eine Rohrleitung (16) ein unter Druck stehendes Gas eingegeben werden kann, und einer Mischausgangsrohrleitung (13),
dadurch gekennzeichnet,
daß zwischen der Dosierpumpe (3) und der Kammer (12) mit variablem Volumen ein das Ventil (5) bildender Schieber vorgesehen ist, der die Rohrleitung (2) am Ausgang des Vorratsbehälters und eine mit der Kammer (12) verbundene Rohrleitung (7) öffnet und schließt, und daß die Kammer (12) von einer Flüssigkeitseinlaßkammer der Dosierpumpe (8) so getrennt ist, daß die Dosier- und Druckminderungsvorgänge stets voneinander getrennt sind.

2. Vorrichtung nach Anspruch 1, dadurch gekennzeichnet, daß die Kammer mit variablem Volumen (12) einen feststehenden Hohlkolben (23) enthält, der mit der Rohrleitung (7) verbunden ist, und aus einem durch einen Kolben (11) verschiebbaren Zylinder besteht, der sich im Gleichlauf mit dem Kolben (8) der Dosierpumpe (3) befindet.

3. Vorrichtung nach einem der Ansprüche 1 oder 2, dadurch gekennzeichnet, daß der Kolben (23) eine zentrale Bohrung im Inneren aufweist, an der eine freie Ventilklappe (18) angebracht ist.

4. Vorrichtung nach Anspruch 2, dadurch gekennzeichnet, daß das Unterteil des Kolbens (23) eine mit kleinen Öffnungen (24) durchsetzte Wandung hat.

5. Vorrichtung nach einem der vorhergehenden Ansprüche dadurch gekennzeichnet, daß die Bewegungen des Schiebers (5) synchron mit den Bewegungen der Kolben (8, 11) ablaufen.

6. Vorrichtung nach Anspruch 3, dadurch gekennzeichnet, daß die Ventilklappe (18) im Inneren eines zylindrischen teils (17), das unterseitig von einem Sieb (20) abgeschlossen und mit dem oberseitig die Rohrleitung (7) verbunden ist, frei (-beweglich) aufgenommen und von einer Feder (19) beaufschlagt ist, und daß die Ventilklappe (18) in Schließlage gebracht wird, sobald der Zylinder mittels des Kolbens (11) nach oben betätigt wird.

**Claims**

1. Whipping apparatus, especially for food products, comprising a liquid products tank (1), a metering pump (3) connected to the tank (1) by a pipe (2) adapted to be occluded by a valve (5), a variable volume chamber (12) into which, in addition to the liquid product, a pressurized gas is introduced through a pipe (16), the said chamber comprising a mixture outlet pipe (13), characterized in that a slide (5) constituting the said valve (5) is provided between the metering pump (3) and the variable volume chamber (12), opening then closing the outlet pipe (2) from the tank, and closing then opening a pipe (7) connected to the variable volume chamber (12), the variable volume chamber (12) being separated from the liquid intake chamber which feeds into the metering pump (8) so that the operations of metering and of compression-expansion are constantly separate.

2. Apparatus according to Claim 1, characterized in that the variable volume chamber (12) comprises a hollow fixed piston (23) connected to the pipe (7) and a cylinder swept by a piston in synchronism with the piston of the metering pump (3).

3. Apparatus according to one of Claims 1 or 2, characterized in that the piston (23) comprises a central bore inside which there is a free valve (18).

4. Apparatus according to Claim 2, characterized in that the bottom part of the piston (23) comprises a wall in which there are small orifices (24).

5. Apparatus according to any one of the preceding Claims, characterized in that the movements of the slide (5) are synchronised with the movements of the pistons (8, 11).

6. Apparatus according to Claim 3, characterized in that the valve (18) is free and reinforced by a spring (19) inside a cylindrical member (17) closed at the bottom by a mesh (20) and connected at the top to the lower part of the pipe (7), the valve (18) rising into the position of closure then the cylinder rises under the action of the piston (11).

**0 185 562**

*Fig. 1*

# Fig. 2